# DEMANDE DE BREVET EUROPEEN

(11) **EP 2 980 469 A1**
(43) Date de publication de la demande: **03.02.2016**
(21) Numéro de dépôt: 15178278.6
(22) Date de dépôt: 24.07.2015
(51) Int. Cl.: F21S 8/10

(54) **MODULE LUMINEUX À GUIDE OPTIQUE POUR VÉHICULE AUTOMOBILE**

(30) Priorité: 30.07.2014 FR 1457377
(71) Demandeur: Valeo Vision Belgique, 7822 Meslin l'Evêque (BE)
(72) Inventeur: VALOIS, Christophe, 59178 HASNON (FR); LUU, Frédéric, 59910 BONDUES (FR); RIOU, Stéphane, 7500 TOURNAI (BE)

(57) **Abrégé**

L'invention concerne un module lumineux, notamment d'éclairage et/ou de signalisaiton, pour véhicule automobile, le module étant apte à émettre un premier faisceau photométrique réglementaire prédéterminé, le module comportant au moins :
- une première source lumineuse associé au premier faisceau photométrique réglementaire prédéterminé et apte à émettre de la lumière,
- un premier guide optique, ledit premier guide comportant une face de couplage de la lumière émise par la première source lumineuse et une face de découplage de la lumière couplée dans le premier guide, le premier guide étant agencé pour permettre la propagation de la lumière depuis sa face de couplage vers sa face de découplage,
- un élément optique supplémentaire disposé de sorte à recevoir de la lumière issue de la face de découplage du premier guide, l'élément optique supplémentaire comportant une face d'entrée de lumière et une face de sortie de lumière,

le module étant caractérisé en ce qu'au moins l'une des faces d'entrée et de sortie de l'élément optique supplémentaire comporte des aménagements optiques aptes à dévier de la lumière issue de la face de découplage de sorte à former au moins partiellement la photométrie dudit premier faisceau photométrique réglementaire prédéterminé.

## Description

La présente invention a pour objet un module lumineux équipant un véhicule automobile, comportant au moins un guide optique et un élément optique supplémentaire. L'invention trouve des applications dans le domaine des véhicules circulant sur routes et, notamment, des véhicules automobiles.

Actuellement, il est connu d'utiliser, dans les dispositifs d'éclairage de la route ou les dispositifs de signalisation ou encore dans les dispositifs d'éclairage de l'habitacle du véhicule, un ou plusieurs guides optiques pour propager un faisceau lumineux. De tels guides optiques permettent de réaliser des fonctions photométriques tout en offrant une grande liberté de style, par exemple en courbant ces guides.

Toutefois, il a été constaté qu'il peut être complexe d'obtenir à l'aide d'un guide courbé un faisceau photométrique réglementaire prédéterminé, c'est-à-dire présentant un flux lumineux souhaité réparti de façon prédéterminé sur une plage angulaire réglementaire. En effet, bien que de tels guides optiques permettent d'obtenir un flux lumineux suffisant à la réalisation d'une fonction photométrique donnée, il est difficile d'obtenir la plage angulaire réglementaire de cette fonction tout en gardant une complète liberté esthétique quant à la réalisation de ce guide.

L'invention a pour but de remédier à cet inconvénient.

L'invention a ainsi pour objet un module lumineux, notamment d'éclairage et/ou de signalisation, pour véhicule automobile, le module étant apte à émettre un premier faisceau photométrique réglementaire prédéterminé, le module comportant au moins :
- une première source lumineuse associé au premier faisceau photométrique réglementaire prédéterminé et apte à émettre de la lumière,
- un premier guide optique, ledit premier guide comportant une face de couplage de la lumière émise par la première source lumineuse et une face de découplage de la lumière couplée dans le premier guide, le premier guide étant agencé pour permettre la propagation de la lumière depuis sa face de couplage vers sa face de découplage,
- un élément optique supplémentaire disposé de sorte à recevoir de la lumière issue de la face de découplage du premier guide, l'élément optique supplémentaire comportant une face d'entrée de lumière et une face de sortie de lumière,
le module étant caractérisé en ce qu'au moins l'une des faces d'entrée et de sortie de l'élément optique supplémentaire comporte des aménagements optiques aptes à dévier de la lumière issue de la face de découplage de sorte à former au moins partiellement la photométrie dudit premier faisceau photométrique réglementaire prédéterminé.

Avantageusement, les aménagements optiques sont disposés exclusivement en vis-à-vis de la face de découplage du premier guide. Eventuellement la largeur d'un aménagement est inférieur ou égale à la largeur du guide.

Le premier guide optique peut avantageusement être un guide de section circulaire et de profil courbé. La lumière émise par la source lumineuse et pénétrant dans le guide via la face de couplage se propage ainsi dans le guide par réflexion interne totale contre les parois du guide.

L'invention propose ainsi de rajouter dans le module lumineux un élément optique supplémentaire au premier guide qui permette d'obtenir la photométrie du premier faisceau photométrique réglementaire prédéterminé, sans modifier la structure et en particulier la courbure du guide. Il est donc possible d'obtenir ledit faisceau photométrique réglementaire prédéterminé tout en gardant une grande liberté de réalisation du guide.

Le module lumineux selon l'invention pourra comporter une ou plusieurs des caractéristiques suivantes :
- le premier guide comporte une face de réflexion, opposée à la face de découplage, qui peut être lisse. Dans ce cas, les rayons pénétrant dans le premier guide via la face de couplage se propagent dans le premier guide jusqu'à rencontrer la face de réflexion, de sorte à être réfléchis vers la face de découplage et ainsi sortir du guide via cette face de découplage ;
- la face de réflexion comporte une succession de prismes, chaque prisme formant avec le prisme suivant un angle de fond. Chaque prisme peut être ainsi formé par au moins deux pans inclinés l'un par rapport à l'autre,
- les prismes sont agencés pour redresser de la lumière se propageant dans le premier guide de sorte à ce que cette lumière quitte la face de découplage en présentant un flux lumineux suffisant à la réalisation du premier faisceau photométrique réglementaire prédéterminé. On entend par flux lumineux la quantité de lumière contenu dans une plage angulaire. Dans ce cas, la plage angulaire peut être décalée par rapport à la plage photométrique réglementaire du premier faisceau et/ou présenter une portée plus restreinte que celle de la plage photométrique réglementaire du premier faisceau,
- les aménagements optiques sont agencés pour redresser de la lumière issue de la face de découplage de sorte à ce que cette lumière quitte la face de sortie selon une plage angulaire incluant la plage angulaire du premier faisceau photométrie réglementaire prédéterminé,
- les aménagements optiques sont disposés uniquement sur la face d'entrée de l'élément optique supplémentaire. La face de sortie peut donc être dans ce cas lisse. En variante, les aménagements optiques peuvent être disposés uniquement sur la face de sortie de l'élément optique supplémentaire, ou encore sur les faces d'entrée et de sortie de l'élément optique supplémentaire,
- les aménagements optiques sont disposés de sorte à suivre le profil, notamment la totalité du profil, du premier guide. Dans ce cas les aménagements optiques peuvent être disposés en rangée. Avantageusement, les aménagements peuvent être évolutifs le long de la rangée et par exemple présenter une hauteur et/ou une largeur et/ou un pas évolutif. Si on le souhaite, chaque aménagement peut être centré sur le guide.
- les aménagements optiques forment plusieurs rangées d'aménagements optiques disposées voisines les unes des les autres,
- chaque aménagement est formé par une nervure convexe,
- la nervure convexe est une nervure cylindrique de génératrice verticale. En variante, la nervure convexe peut être un tore,
- chaque aménagements est formé par une ondulation, c'est-à-dire par une nervure convexe suivi d'un renfoncement concave. Ce type d'aménagement présente l'avantage d'être plus facilement industrialisable qu'une nervure convexe qui présente un angle vif,
- l'ondulation est une ondulation cylindrique de génératrice verticale. Avantageusement, la nervure et le renfoncement sont cylindriques, de même génératrice et leurs directrices formant une courbe continue,
- l'ensemble des aménagements forme une succession d'ondulations continues,
- l'élément optique supplémentaire est formé par une glace de fermeture du module lumineux. En variante, l'élément optique supplémentaire peut être un écran intermédiaire disposé entre le premier guide et une glace du module lumineux,
- la première source lumineuse est apte à émettre de la lumière de couleur blanche à travers la face de couplage du premier guide. Le premier faisceau photométrique réglementaire peut dans ce cas former une fonction de feu diurne (DRL),
- le module est apte à émettre un deuxième faisceau photométrique réglementaire prédéterminé distinct du premier faisceau photométrique réglementaire prédéterminé,
- le module comportant une deuxième source lumineuse associée au deuxième faisceau photométrique réglementaire prédéterminé, dans lequel la deuxième source lumineuse est apte à émettre de la lumière de couleur ambre à travers la face de couplage du premier guide. Le deuxième faisceau photométrique réglementaire peut dans ce cas former une fonction d'indicateur de direction,
- les première et deuxième sources lumineuse comportent chacune au moins une puce semi-conductrice émettrice de lumière. Dans ce cas, les première et deuxième sources peuvent appartenir à une même diode électroluminescente de type multipuces,
- les première et deuxième sources lumineuses sont montées sur un même support, par exemple une même carte de circuit imprimé,
- la première source lumineuse est également associée au deuxième faisceau photométrique réglementaire prédéterminé, la première source lumineuse étant apte à émettre de la lumière selon une intensité lumineuse réduire par rapport à la lumière émise pour le premier faisceau photométrique réglementaire prédéterminé. Le deuxième faisceau photométrique réglementaire peut dans ce cas former une fonction de feu de position,
- le module comportant :
   o une deuxième source lumineuse associée au deuxième faisceau photométrique réglementaire prédéterminé et apte à émettre de la lumière,
   o un deuxième guide optique, ledit deuxième guide comportant une face de couplage de la lumière émise par la deuxième source lumineuse et une face de découplage de la lumière couplée dans le deuxième guide, le deuxième guide étant agencé pour permettre la propagation de la lumière depuis sa face de couplage vers sa face de découplage,
      le module étant caractérisé en ce qu'au moins l'une des faces d'entrée et de sortie de l'élément optique supplémentaire comporte d'autres aménagements optiques aptes à dévier de la lumière issue de la face de découplage du deuxième guide de sorte à former au moins partiellement la photométrie dudit deuxième faisceau photométrique réglementaire prédéterminé. Dans ce cas, les premier et deuxième guides peuvent former une même pièce.

L'invention sera mieux comprise à la lecture des figures annexées, qui sont fournies à titre d'exemples et ne présentent aucun caractère limitatif, dans lesquelles :
- les figures 1 et 2 représentent respectivement en perspective et en coupe un module lumineux selon un premier mode de réalisation de l'invention, et
- les figures 3 et 4 représentent respectivement en perspective et en coupe un module lumineux selon un deuxième mode de réalisation de l'invention, et

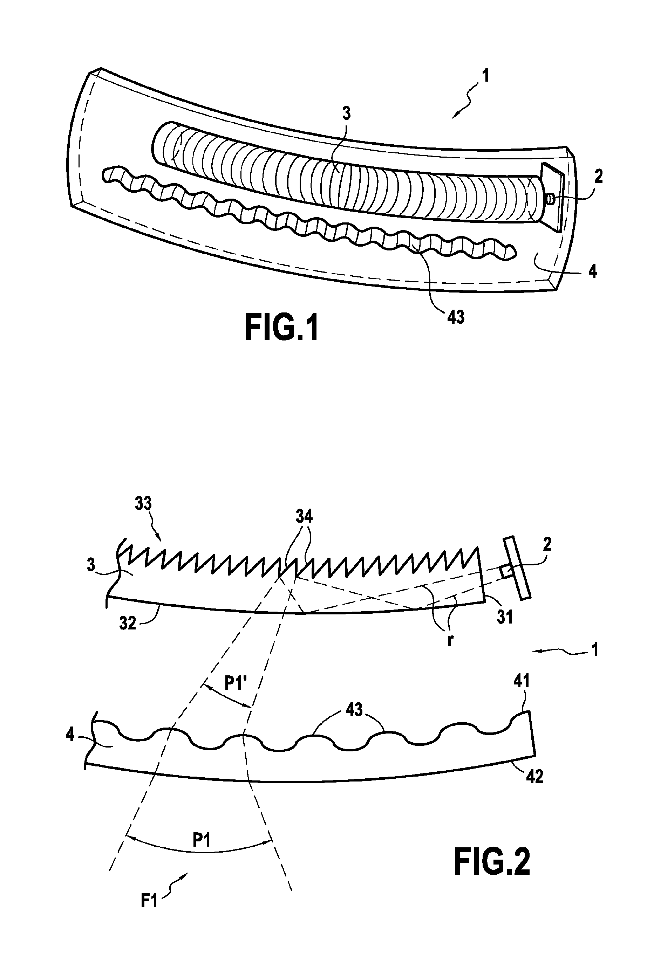

On a représenté en figure 1 et 2 un module lumineux 1 d'éclairage pour véhicule automobile selon un premier mode de réalisation de l'invention.

Le module 1 est capable d'émettre un premier faisceau photométrique réglementaire prédéterminé F1 de type feu diurne DRL. Le premier faisceau F1 nécessite un flux lumineux donné et réparti de façon déterminé sur une plage angulaire P1

Le module 1 comporte une première source lumineuse 2 apte à émettre de la lumière et associée au premier faisceau F1.

Le module 1 comporte en outre un premier guide optique 3 de section circulaire et de profil courbé.

Le premier guide optique 3 comporte une face de couplage 31 de la lumière émise par la première source lumineuse 1 et une face avant de découplage lisse 32 de la lumière couplée dans le premier guide .

Le premier guide 3 comporte en outre une face arrière de réflexion 33, opposée à la face avant de découplage 32. La face de réflexion 33 est pourvue d'une succession de prismes 34, chaque prisme formant avec le prisme suivant un angle de fond. On observe ainsi sur la figure 2 que chaque prisme 34 est formé par au moins deux pans inclinés l'un par rapport à l'autre.

La première source lumineuse 2 émet ainsi des rayons r dans le premier guide 3 via la face de couplage 31 qui se propagent par réflexion interne totale jusqu'à rencontrer la face de réflexion arrière 33, de sorte à être réfléchis par les prismes 34 vers la face de découplage 32 et ainsi sortir du guide via cette face de découplage.

La figure 2 montre que les prismes 34 sont agencés pour redresser les rayons r se propageant dans le premier guide de sorte à ce que ces rayons r quittent la face de découplage 32 en présentant un flux lumineux suffisant à la réalisation du premier faisceau photométrique réglementaire prédéterminé. On constate toutefois que la plage angulaire P1' des rayons r sortant de la face de découplage 32 est décalée et présente une portée restreinte par rapport à la plage photométrique réglementaire P1 du premier faisceau F1. En d'autre termes, les rayons r quittant le guide de lumière 3 forment un faisceau partiel qui, bien que présentant un flux lumineux suffisant à réaliser la fonction DRL, ne permet pas d'obtenir la photométrie réglementaire de cette fonction DRL.

A cet effet, le module 1 comporte un élément optique supplémentaire 4, formé par une glace de fermeture du module lumineux, disposé de sorte à recevoir de la lumière issue de la face de découplage 32 du premier guide 3. L'élément optique supplémentaire 4 comportant une face d'entrée de lumière 41 et une face lisse de sortie de lumière 42.

La face d'entrée 41 de l'élément optique supplémentaire 4 comporte des aménagements optiques 43 disposés en rangée exclusivement en vis-à-vis de la face de découplage 32 du premier guide 3 et de sorte à suivre le profil courbé du premier guide 3. En outre, la largeur de chaque aménagement 43 est inférieur ou égale à la largeur de la face de découplage 32 du guide 3. Tel qu'illustré en figure 2, chaque aménagement 43 est formé par une ondulation, c'est-à-dire par une nervure convexe suivi d'un renfoncement concave. Par ailleurs, chaque ondulation 43 est une ondulation cylindrique de génératrice verticale de sorte à exclusivement impacter la répartition horizontale des rayons lumineux traversant l'élément optique supplémentaire 4. L'ensemble des aménagements 43 forme une ondulation continue le long de l'élément optique supplémentaire 4.

On constate sur la figure 2 que les aménagements 43 sont aptes à dévier de la lumière issue de la face de découplage 32 et pour ainsi redresser cette lumière de sorte à ce que cette lumière quitte la face de sortie selon une plage angulaire P1 correspondant à la plage angulaire du premier faisceau photométrie réglementaire prédéterminé F1. En d'autres termes, les aménagements 43 permettent d'étaler les rayons lumineux r quittant la face de découplage et ainsi à la fois d'élargir la plage P1' et de la décaler de sorte à former la plage P1.

Le module 1 permet ainsi d'obtenir un faisceau F1 de type DRL réglementaire sans toutefois modifier l'esthétique du module liée à la courbure du guide optique 3.

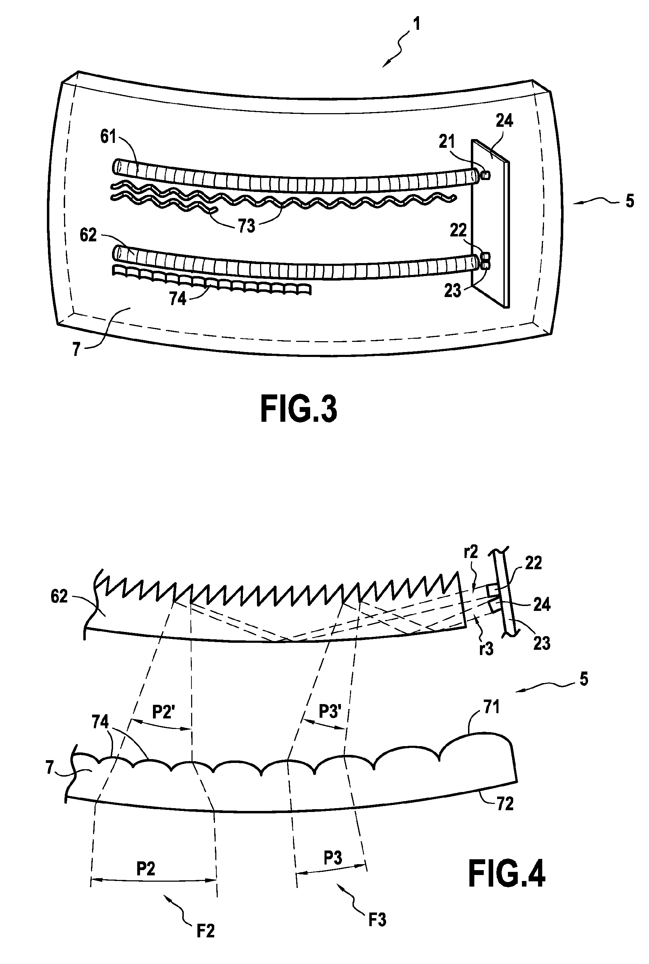

On a représenté en figure 3 et 4 un module lumineux 5 selon un deuxième mode de réalisation de l'invention.

Le module 5 est capable d'émettre un premier faisceau photométrique réglementaire prédéterminé F1 de type feu diurne DRL, un deuxième faisceau photométrique réglementaire prédéterminé F2 de type indicateur de direction TI et un troisième faisceau photométrique réglementaire prédéterminé F3 de type feu de position PL. Les premier, deuxième et troisième faisceaux F1, F2 et F3 nécessitent chacun un flux lumineux donné et réparti de façon déterminé sur une plage angulaire.

Le module 5 comporte une première source lumineuse 21 apte à émettre de la lumière blanche et associée au premier faisceau F1, une deuxième source lumineuse 22 apte à émettre de la lumière ambre et associée au deuxième faisceau F2 et une troisième source lumineuse 23 apte à émettre de la lumière blanche et associée au troisième faisceau F3. Les sources 21, 22 et 23 sont montées sur une même carte de circuit imprimé 24. En outre, les sources 22 et 23 appartiennent à une même diode électroluminescente de type multipuces.

Le module 5 comporte des premier et deuxième guides optiques 61 et 62 de section circulaire et de profil courbé, semblables au guide optique 3 du mode de réalisation de la figure 2. La première source lumineuse 21 émet ainsi des rayons dans le premier guide 61 tandis que les deuxième et troisième sources 22 et 23 émettent chacune des rayons, simultanément ou non, dans le deuxième guide 62.

Le module 5 comporte en outre un élément optique supplémentaire 7, formé par une glace de fermeture du module lumineux, disposé de sorte à recevoir de la lumière issue de chacune des faces de découplage des premier et deuxième guides 61 et 62.

L'élément optique supplémentaire 7 comportant une face d'entrée de lumière 71 et une face lisse de sortie de lumière 72.

La face d'entrée 71 de l'élément optique supplémentaire 7 comporte des aménagements optiques 73 disposés selon plusieurs rangées disposées voisines les unes des les autres et en vis-à-vis du premier guide 61. Ces aménagements 73 sont semblables aux aménagements 43 du module 1 de la figure 2.

La face d'entrée 71 comporte également des aménagements 74 disposés en rangée et en vis-à-vis de la face de découplage du deuxième guide 62.

Chaque aménagement 74 est formé par une nervure convexe de génératrice verticale. En outre, la hauteur et le pas des nervures 74 évolue de façon dégressive le long de l'élément optique supplémentaire 7 avec la distance aux sources lumineuses 22 et 23.

On constate sur la figure 4 que les aménagements 74 permettent d'étaler les rayons lumineux r2 et r3 émis respectivement par les sources 22 et 23 quittant la face de découplage et ainsi respectivement d'élargir la plage P2' et de recentrer la plage P3' de sorte à former les plages P2 et P3.

Le module 1 permet ainsi d'obtenir des faisceaux F1, F2 et F3 de type DRL, TI et PL réglementaires sans toutefois modifier l'esthétique du module liée aux courbures des guides optiques 61 et 62.

Les modes de réalisation de l'invention servant de base à la présente description ne sont pas limitatifs, pour autant qu'ils permettent d'obtenir les effets techniques tels que revendiqués.

## Revendications

1. Module lumineux, notamment d'éclairage et/ou de signalisaiton, pour véhicule automobile, le module étant apte à émettre un premier faisceau photométrique réglementaire prédéterminé, le module comportant au moins :
- une première source lumineuse associé au premier faisceau photométrique réglementaire prédéterminé et apte à émettre de la lumière,
- un premier guide optique, ledit premier guide comportant une face de couplage de la lumière émise par la première source lumineuse et une face de découplage de la lumière couplée dans le premier guide, le premier guide étant agencé pour permettre la propagation de la lumière depuis sa face de couplage vers sa face de découplage,
- un élément optique supplémentaire disposé de sorte à recevoir de la lumière issue de la face de découplage du premier guide, l'élément optique supplémentaire comportant une face d'entrée de lumière et une face de sortie de lumière,
le module étant **caractérisé en ce qu'**au moins l'une des faces d'entrée et de sortie de l'élément optique supplémentaire comporte des aménagements optiques aptes à dévier de la lumière issue de la face de découplage de sorte à former au moins partiellement la photométrie dudit premier faisceau photométrique réglementaire prédéterminé.

2. Module lumineux selon la revendication précédente, dans lequel le premier guide comporte une face de réflexion, opposée à la face de découplage, la face de réflexion comporte une succession de prismes, chaque prisme formant avec le prisme suivant un angle de fond.

3. Module lumineux selon la revendication 2, dans lequel les prismes sont agencés pour redresser de la lumière se propageant dans le premier guide de sorte à ce que cette lumière quitte la face de découplage en présentant un flux lumineux suffisant à la réalisation du premier faisceau photométrique réglementaire prédéterminé.

4. Module selon l'une des revendications 1 à 3, dans lequel les aménagements optiques sont agencés pour redresser de la lumière issue de la face de découplage de sorte à ce que cette lumière quitte la face de sortie selon une plage angulaire incluant à la plage angulaire du premier faisceau photométrie réglementaire prédéterminé.

5. Module lumineux selon l'une des revendications 1 à 4, dans lequel les aménagements optiques sont disposés uniquement sur la face d'entrée de l'élément optique supplémentaire.

6. Module selon l'une des revendications 1 à 5, dans lequel chaque aménagement est formé par une nervure convexe.

7. Module selon la revendication 6, dans lequel la nervure convexe est une nervure cylindrique de génératrice verticale.

8. Module selon l'une des revendications 1 à 5, dans lequel chaque aménagements est formé par une ondulation.

9. Module selon la revendication 8, dans lequel l'ondulation est une ondulation cylindrique de génératrice verticale.

10. Module selon la revendication 9, dans lequel l'ensemble des aménagements forme une succession d'ondulations continues.

11. Module lumineux selon l'une des revendications 1 à 10, dans lequel l'élément optique supplémentaire est formé par une glace de fermeture du module lumineux.

12. Module lumineux selon l'une des revendication 1 à 11, **caractérisé en ce que** le module est apte à émettre un deuxième faisceau photométrique réglementaire prédéterminé distinct du premier faisceau photométrique réglementaire prédéterminé, le module comportant :
- une deuxième source lumineuse associée au deuxième faisceau photométrique réglementaire prédéterminé et apte à émettre de la lumière,
- un deuxième guide optique, ledit deuxième guide comportant une face de couplage de la lumière émise par la deuxième source lumineuse et une face de découplage de la lumière couplée dans le deuxième guide, le deuxième guide étant agencé pour permettre la propagation de la lumière depuis sa face de couplage vers sa face de découplage,
le module étant **caractérisé en ce qu'**au moins l'une des faces d'entrée et de sortie de l'élément optique supplémentaire comporte d'autres aménagements optiques aptes à dévier de la lumière issue de la face de découplage du deuxième guide de sorte à former au moins partiellement la photométrie dudit deuxième faisceau photométrique réglementaire prédéterminé.
